# EUROPEAN PATENT APPLICATION

(11) **EP 4 223 845 A1**
(43) Date of publication of application: **09.08.2023**
(21) Application number: 23155428.8
(22) Date of filing: 07.02.2023
(51) Int. Cl.: C09D 5/14, B05D 7/00, C09D 7/61, G01N 21/64, B82Y 40/00

(54) **METHODS FOR FORMING MULTIFUNCTIONAL BARRIER COATINGS WITH ENHANCED COMPONENT POSITIONING**

(30) Priority: 07.02.2022 US 202217666101
(71) Applicant: B/E Aerospace, Inc., Winston-Salem, NC 27105 (US)
(72) Inventor: PIMENTEL, Katherina Urena, Manchester, CT (US); POTEET, Steven, Ashland, MA (US); MARTZ, Thomas, Winstem-Salem, NC (US); REXWINKLE, Irene, Mill Creek, WA (US); MCCONNELL, David C., Annalong (GB)
(74) Representative: Dehns

(57) **Abstract**

The present disclosure provides a method for forming a barrier coating on a surface of a substrate. The method includes applying a barrier coating forming solution to the substrate, allowing the applied barrier coating forming solution to partially cure, applying an antimicrobial coating forming solution atop the partially cured barrier coating forming solution, and allowing the two applied coatings to fully cure or dry to produce a multifunctional surface coating. The barrier coating forming solution includes at least one performance component other an antimicrobial component, and the antimicrobial coating forming solution includes an antimicrobial component. A formed multifunctional surface coating produced according to the method positions the antimicrobial component at a concentrated amount at or near the surface of the formed multifunctional coating.

## Description

### TECHNICAL FIELD

The present disclosure relates generally to barrier coatings, and more particularly, to multifunctional barrier coatings and methods for forming barrier coatings with enhanced antimicrobial component positioning.

### BACKGROUND

The properties of barrier coatings depend heavily on the application in which the barrier coating must perform. Regarding aircraft interior components, to which the present disclosure finds particular application, additives and coatings can be applied to high-contact interior surfaces to improve performance. For example, flame retardant coatings can be applied to material surfaces to form a barrier between the material surface and the surrounding environment to counteract fire generation and propagation. In addition to improving performance, barrier coatings are commonly applied to material surfaces to improve cleanability. For example, hydrophobic barrier coatings derived from polymers can be applied to repel fluids. In addition to performance and cleanability, barrier coatings with antimicrobial properties are commonly applied to mitigate the potential spread of infectious agents. For example, suspensions including antimicrobial agents are commonly used as disinfectants in barrier coatings due to their ability to neutralize microbes.

In response to the coronavirus pandemic, airlines and original equipment manufacturers (OEMs) have focused on improving interior hygiene, such as the unprecedented use of disinfectants and/or UV sanitation, both of which can damage interior surfaces. While various types of barrier coatings are commercially available, there is no singular coating composition that provides the desired hydrophobicity, antimicrobial performance, and resistance to physical contact, chemicals, fluids, UV, etc. As such, prior art coating applications require multiple layers each having a dedicated function, which is time consuming and costly to apply, and which is difficult to achieve the desired effect because of the layering.

The present inventors, in earlier filed applications, have disclosed barrier coatings that provide desired hydrophobicity, antimicrobial performance, and resistance to physical contact, chemicals, fluids, UV, etc., formed from singular coating compositions. The present inventors have further discovered, that in some applications, it would be desirable to position certain components nearer or at the surface of the formed barrier coating to achieve a desired effect and/or enhance performance of the barrier coating. For example, certain functions of a multifunctional barrier coating could be enhanced by positioning the components for achieving those certain functions nearer or at the surface of the formed coating.

Accordingly, what is needed are further advancements in barrier coatings and methods for forming the same that enhance performance of the formed coatings while decreasing production times.

### BRIEF SUMMARY

To achieve the foregoing and other advantages, in a first aspect the present disclosure provides a method for forming a multifunctional barrier coating. The method includes providing a substrate having a surface, providing a barrier coating forming solution including a base coating component and at least two performance components, applying the barrier coating forming solution to the surface of the substrate, providing a antimicrobial coating forming solution including an antimicrobial component, applying after a predetermined time duration the antimicrobial coating forming solution atop the applied barrier coating forming solution, and allowing the two applied coating forming solutions to cure or dry to form a multifunctional coating including antimicrobial performance on the surface of the substrate.

In some embodiments, the barrier coating forming solution is devoid of an antimicrobial component.

In some embodiments, the method further includes subjecting a top surface of the fully formed multifunctional coating to a nanotexturing process to form a predetermined pattern of spaced apart upstanding structures in the top surface of the formed multifunctional coating.

In some embodiments, the base coating component is a urethane, epoxy, polyimide, or polyamide, individually or in combination, and the at least two performance components include at least two of a flame, smoke and toxicity (FST) resistive component, an ultraviolet (UV) resistive component, and a dye component.

In some embodiments, the barrier coating forming solution includes the base coating component provided in an amount from 5 to 40% by weight of the first barrier coating forming solution, a solvent in an amount from 50 to 70% by weight of the first barrier coating forming solution, a flame, smoke and toxicity (FST) resistive component in an amount from 0.1 to 5% by weight of the first barrier coating forming solution, an ultraviolet (UV) resistive component in an amount from 0.1 to 2% by weight of the first barrier coating forming solution, and a dye component in an amount less than 0.5% by weight of the first barrier coating forming solution.

In some embodiments, the solvent includes alcohol, water, and an acetate, individually or in combination.

In some embodiments, the FST resistive component includes clay having a particle diameter size from 1 to 25 microns, graphene, graphite, carbon nanotubes, aluminum trihydrate, an organophosphate, magnesium hydroxide, an antimony oxide, a molybdenum compound, a boron compound, a halogenated compound, melamine, and zinc, individually or in combination.

In some embodiments, the UV resistive component includes titanium dioxide, zinc oxide, a UV stabilizer, a hindered amine light stabilizer (HALS), and graphene, individually or in combination.

In some embodiments, the dye component includes a fluorescent indicator capable of absorption in the UV spectrum and emission in the visible spectrum.

In some embodiments, the antimicrobial component includes copper, zinc pyrothione, silver, silver oxide, graphene, a quaternary ammonium compound, a silane quaternary ammonium compound, and triclosan, individually or in combination.

In some embodiments, the predetermined time duration ranges from 1 minute to 24 hours, more preferably from 5 minutes to 2 hours, and most preferably from 10 minutes to 1 hour.

According to another aspect, the present disclosure provides a method for forming a multifunctional coating including the steps of providing a substrate having a surface, providing a barrier coating forming solution comprising at least two performance components and devoid of an antimicrobial component, applying the barrier coating forming solution to the surface of the substrate, allowing the applied barrier coating forming solution to partially cure for a predetermined time duration, providing an antimicrobial coating forming solution comprising an antimicrobial component, applying the antimicrobial coating forming solution atop the partially cured applied barrier coating forming solution, and allowing the two coatings to fully cure or dry together to form a multifunctional coating on the surface of the substrate.

In some embodiments, the predetermined time duration ranges from 1 minute to 24 hours, more preferably from 5 minutes to 2 hours, and most preferably from 10 minutes to 1 hour.

In some embodiments, the barrier coating forming solution includes a base coating component provided in an amount from 5 to 40% by weight of the first barrier coating forming solution, a solvent in an amount from 50 to 70% by weight of the first barrier coating forming solution, a flame, smoke and toxicity (FST) resistive component in an amount from 0.1 to 5% by weight of the first barrier coating forming solution, an ultraviolet (UV) resistive component in an amount from 0.1 to 2% by weight of the first barrier coating forming solution, and a optionally a dye component in an amount less than 0.5% by weight of the first barrier coating forming solution.

This summary is provided solely as an introduction to subject matter that is fully described in the detailed description. This brief summary should not be considered to describe essential features nor be used to determine the scope of the claims. Moreover, it is to be understood that both the foregoing summary and the following detailed description are exemplary and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a schematic diagram illustrating the components of a multifunctional barrier coating composition in accordance with one or more embodiments of the present disclosure;
FIG. 2 is a flow diagram of a method for forming a barrier coating on a surface of a substrate and detecting the presence thereof using a quantifiable measurement technique that considers contact angle, in accordance with one or more embodiments of the present disclosure;
FIGS. 3A and 3B illustrate schematically the implementation of a disclosed contact angle measurement methodology to determine the integrity of an applied barrier coating;
FIG. 4 illustrates schematically the implementation of a disclosed fluorescence measurement methodology to determine the integrity of an applied barrier coating;
FIG. 5 is a flow diagram illustrating a barrier coating quantification method, in accordance with one or more embodiments of the present disclosure;
FIG. 6 is a collection of photographs of surface luminescence at various wear cycles, in accordance with one or more embodiments of the present disclosure;
FIG. 7 is a flow diagram of a method for forming and nanotexturing a formed barrier coating, in accordance with one or more embodiments of the present disclosure; and
FIG. 8 is a flow diagram of a method for forming a multifunctional coating including applying different coating forming solutions in a sequential order.

### DETAILED DESCRIPTION

Before explaining one or more embodiments of the disclosure in detail, it is to be understood that the embodiments are not limited in their application to the details of construction and the arrangement of the components or steps or methodologies set forth in the following description. In the following detailed description of embodiments, numerous specific details may be set forth to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

Unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Broadly speaking, the present disclosure provides multifunctional barrier coating forming solutions, methods for applying barrier coating solutions to substrates, and methods for nanotexturing the surface of formed barrier coatings to impart or improve hydrophobicity of the formed barrier coating. In addition, the methods according to the present disclosure may include detecting formed barrier coatings to determine the integrity thereof, for instance on interior surfaces of passenger vehicles such as aircraft.

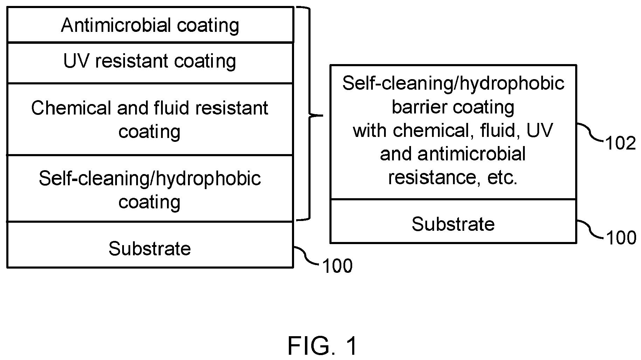

With reference to FIG. 1, a substrate 100 according to the present disclosure may be any substrate type, for instance a high-contact substrate located in a passenger or crew area of a passenger vehicle such as an aircraft, bus, train, ship, etc. Examples of substrate materials include, but are not limited to, synthetic or natural fabric surfaces, plastics, metals, composites and composite finishes, wood, glass, leather, and other substrates. Substrate environments may include, but are not limited to, passenger cabins, crew quarters, lavatories, galleys and cockpits. Other environments may include schools, hospitals, public buildings, etc. In the case of passenger vehicles, the substrate may be an element of a passenger seat, a passenger suite, an interior panel, an overhead bin, a door, a wall, a passenger amenity, a control panel, a passenger service unit, a lavatory fixture, galley equipment, and beverage carts, among others. In some embodiments, the substrate may be an element of a mechanism operable for manipulating another element, for example, a handle, lock, latch, switch, control panel or other high-contact surface.

In embodiments, the present disclosure provides multifunctional barrier coating solutions 102 for forming barrier coatings on substrate surfaces, wherein the functionality of the formed barrier coatings includes, but is not limited to, self-cleaning, hydrophobicity, fluid resistance, chemical resistance, UV resistance, resistance to wear from physical contact, improved FST performance, and antimicrobial properties.

In some embodiments, the barrier coating solution includes a base coating component in an amount from 5% to 40% by weight of the barrier coating forming solution, and more preferably from 25% to 35% by weight of the barrier coating forming solution. Examples of base coating components include, but are not limited to, siloxanes, silazanes, fluoro-substituted siloxanes or silazanes, polymethylsisequioxane, and polydimethylsiloxane, individually or in combinations thereof. In some embodiments, the base coating component may include a binder system including hydrophobic polymer(s) to form a curable surface coating, for instance a polysiloxane-based surface coating.

In some embodiments, the base coating component may include a binder system such as a curable resin having functional groups contained in the resin as a curing agent, for instance epoxy polymers, polyurethanes, alkyds, melamine polymers, phenolic polymers, polyethylenes, polypropylenes, polystyrenes, saturated polyesters, polyamides, polyvinyl compounds, polyisoprenes, polybutadienes, polystyrene-butadienes, individually or in combinations thereof. In some embodiments, the base coating component may be a polysiloxane-based aqueous coating composition for roomtemperature curing, gloss retention and durability in interior applications. Other composite and ultra-violet (UV) resins are envisioned, for instance, resins that improve the compatibility other resins.

In some embodiments, the base coating component includes a hydrophobic polymer to impart increased water repellency and durability of water repellant, as well as resistance to the effects of UV radiation, abrasion and chemical disinfectants. Suitable examples of hydrophobic polymers include, but are not limited to, silicon-based polymers such as polysiloxanes, siloxanes and organofunctional silanes, as well as fluoropolymers, individually or in combinations thereof.

The barrier coating forming solutions according to the present disclosure further include a solvent in an amount from 50% to 70% by weight of the barrier coating forming solution. Examples of solvents include, but are not limited to, tetrahydrofuran preferable for providing uniform coating thickness and rapid drying, as well as good working viscosity, alcohols such as isopropanol and ethanol, water, and acetates such as methyl acetate and tert-butyl acetate, individually or in combination. In some embodiments, aqueous solvents may be preferable to organic solvents for environmental and substrate compatibility reasons.

The barrier coating forming solutions according to the present disclosure further include an FST resistive/performance enhancing component in an amount from 0.1% to 5% by weight of the barrier coating forming solution, more preferably from 0.5% to 3.5% by weight of the barrier coating forming solution. Examples of FST components include, but are not limited to, micro- or nano-sized clays such as montmorillonite and bentonite which can be functionalized with organosilanes to promote dispersion in the solution, preferably 2D nano-sized (i.e., in the z-direction, meaning stacks that are mono to a few layers), with particle size diameters from 0.1 to 25 microns. Other examples of FST components include graphene, carbon nanotubes, graphite, aluminum trihydrate, organophosphates (e.g., ammonium polyphosphate) such as phosphate esters, phosphonates, and phosphinate such as triphenylphosphate and derivatives thereof, chlorophosphates, diphosphates, phosphine oxides, red phosphorus and trialkylphosphates, magnesium hydroxide, antimony oxides, molybdenum compounds (e.g., molybdic oxide, ammonium octamolybdate and zinc molybdate), boron compounds such as barium metaborate and ammonium fluoroborate, decabromo diphenyl ethane, HBCD, tris-tribromophenoxy triazine, melamine and derivatives thereof, melamine cyanurate, zinc stannate, and zinc borate, individually or in combinations thereof.

The barrier coating forming solution further includes a UV resistant component in an amount from 0.1 % to 2% by weight of the barrier coating forming solution. Examples of UV resistant components include, but are not limited to, titanium dioxide preferable micro- or nano-sized, zinc oxide preferably micro- or nano-sized, UV stabilizers such as triazoles, for instance hydroxyphenyl-benzotriazole or derivatives thereof, hindered amine light stabilizers (HALS) such as derivatives of 2, 2, 6, 6-tetramethyl piperidine, and graphene preferably particle diameter sized from 0.1 to 25 microns in mono to layer stacks, individually or in combinations thereof.

The barrier coating forming solution further includes an antimicrobial component in an amount from 0.1% to 5% by weight of the barrier coating forming solution, more preferably from 0.5% to 2% by weight of the barrier coating forming solution. Examples of antimicrobial components may include, but are not limited to, copper, zinc pyrothione, silver, silver oxide preferably nano-sized, graphene preferably in a particle size from 0.1 microns to 25 microns, quaternary ammonium compounds such as benzethonium chloride, methylbenzethonium chloride, benzalkonium chloride and cetyltrimethylammonium chloride, silane quaternary ammonium compounds such as 3-(trihydroxysilyl) propyldimethyloctadecyl ammonium chloride, and triclosan, individually or in combinations thereof.

Optionally, when desiring coating detectability functionality via fluorescence, the barrier coating forming solution may include a dye component in an amount less than 0.5% by weight of the barrier coating forming solution. Examples of dyes may include, but are not limited to, fluorescent indicators such as any fluorescent compound capable of absorption in the UV spectrum and emission in the visible spectrum. For example, the fluorescent compound may absorb radiation in the 100-415 nm wavelength range, more preferably in the 300-415 nm wavelength range, and most preferably in the 365-415 nm wavelength range, and emit radiation in the 100-1000 nm wavelength range, and more preferably emit visible light in the 380-740 nm wavelength range. Suitable fluorescent compounds may be transparent in the presence of visible light and uncolored so as not to alter the color and/or transparency of the coating. Suitable fluorescent compounds can include, but are not limited to, commercially available fluorescent dyes, pigments, colorants and brighteners. A specific, non-limiting example of a suitable fluorescent compound can include 5-[[4-[bis(2-hydroxyethyl)amino]-6-(4-sulfonatoanilino)-1,3,5-triazin-2-yl]amino]-2-[(E)-2-[4-[[4-[bis(2-hydroxyethyl)amino]-6-(4-sulfonatoanilino)-1,3,5-triazin-2-yl]amino]-2-sulfonatophenyl]ethenyl]benzenesulfonate.

In some embodiments, the fluorophoric dye compounds may be anionic dye compounds of λex < 500 nm and λem > 400 nm may be ideally invisible under normal visible light and fluoresce under UV light (e.g., tetrasodium 4,4'-bis[[4-[bis(2-hydroxyethyl)amino]-6-(4-sulphonatoanilino)-1,3,5-triazin-2-yl]amino]stilbene-2,2'-disulphonate], disodium;5-[[4-anilino-6-[2-hydroxyethyl(methyl)amino]-1,3,5-triazin-2-yl]amino]-2-[2-[4-[[4-anilino-6-[2-hydroxyethyl(methyl)amino]-1,3,5-triazin-2-yl]amino]-2-sulfonatophenyl]ethenyl]benzenesulfonate, disodium 4,4'-bis(4-anilino-6-morpholino-s-triazin-2-ylamino)-2,2'-stilbenedisulfonate, disodium;5-[[4-(2-methylanilino)-6-morpholin-4-yl-1,3,5-triazin-2-yl]amino]-2-[2-[4-[[4-(2-methylanilino)-6-morpholin-4-yl-1,3,5-triazin-2-yl]amino]-2-sulfonatophenyl]ethenyl]benzenesulfonate, hexasodium;2-[[4-[(3-amino-3-oxopropyl)-(2-hydroxyethyl)amino]-6-[4-[2-[4-[[4-[(3-amino-3-oxopropyl)-(2-hydroxyethyl)amino]-6-(2,5-disulfonatoanilino)-1,3,5-triazin-2-yl]amino]-2-sulfonatophenyl]ethenyl]-3-sulfonatoanilino]-1,3,5-triazin-2-yl]amino]benzene-1,4-disulfonate, and related, as well as fluorescein-SA, Lucifer yellow, sulforhodamine-B or sulforhodamine-101, pyranine, HPTS or HPTS(Lys)3, MPTS, CTR, TSPP, TCPP, PTCA), Dyes (<0.5 wt%), triazine-stilbene, coumarins, imidazolines, diazoles, triazoles, benzoxazoles, and biphenyl stilbenes, individually or in combinations thereof.

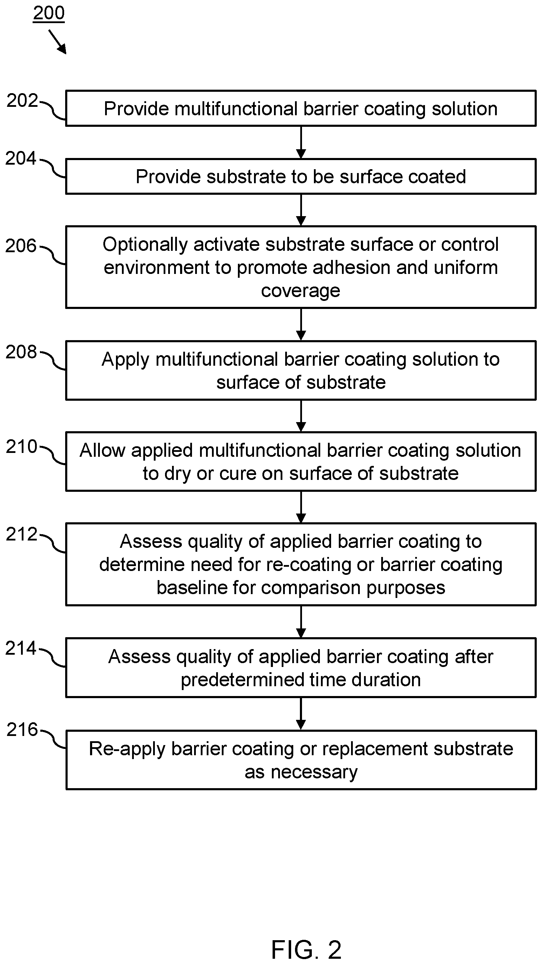

With reference to FIG. 2, a method for forming a barrier coating on a substrate surface is illustrated generally at 200. In a Step 202, a multifunctional barrier coating solution according to the above is provided. In a Step 204, a substrate having a surface to be surface coated is provided, for instance an aircraft interior component as described above. In an optional Step 206, the surface of the substrate may be pre-treated or otherwise activated to promote adhesion of the barrier coating to be formed on the surface. For example, activation treatments may include, but are not limited to, the application of heat, vacuum, primer, plasma, corona, UV/ozone, and chemical, individually or in combination, to promote uniform surface coating with enhanced adhesion/binding between the substrate and the formed coating. Substrate preparation, prior to coating application, may include one or more of cleaning, etching, heating, etc. In embodiments, the activation may improve the durability of the formed barrier coating. Activation techniques may be implemented prior to, during, or subsequent to barrier coating solution application, for instance under controlled conditions.

In a Step 208, the barrier coating forming solution is applied to the surface of the substrate. Application techniques may include electrostatic spray application, dipping, wiping, brushing, spraying or other application method, individually or in combination. In a Step 210, the applied barrier coating forming solution is allowed to dry or cure on the surface of the substrate, under ambient or controlled conditions. In some embodiments, the solution may be allowed to stand on the surface of the substrate for a predetermined time duration, for example, about 30 minutes to about 6 hours to form the barrier coating. Excess (e.g., unbonded) barrier coating solution may be removed in one or more optional rinsing steps and the coated substrate may be dried in one or more optional drying steps. Additional/optional steps may include applying at least one second surface coat atop the applied first or previous coat and allowing the at least one additional coat to dry or cure. In some embodiments, formed surface coating films have a thickness ranging from less than 1 mm to greater than several micrometers, depending on application.

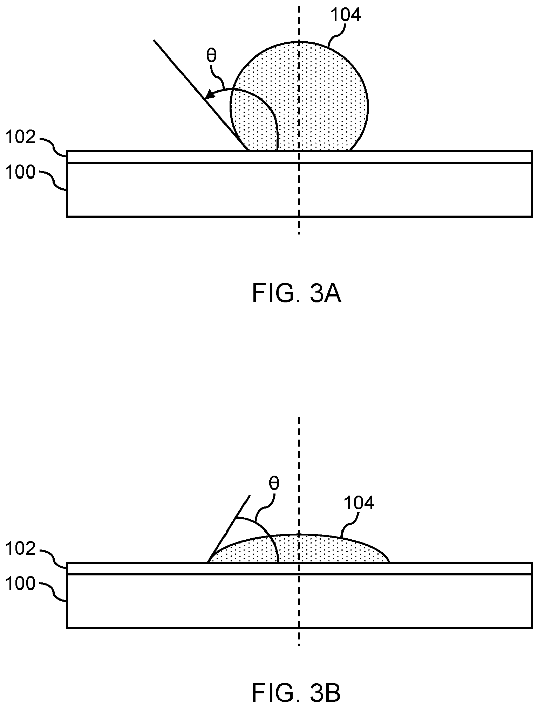

In a Step 212, after the barrier coating is formed, an initial assessment of the barrier coating is performed by subjecting the substrate under test to a quantifiable measurement technique. The initial assessment of the formed barrier coating may serve to determine the quality of the initially formed barrier coating, and assuming a quality/satisfactory initial coating, may serve as a baseline against which future barrier coating assessments of the substrate are compared. With reference to FIGS. 3A and 3B, in some embodiments, the quantifiable measurement technique may include performing a measurement of a liquid to solid angle of contact. The contact angle of a liquid, for instance a droplet of water 104, applied atop the freshly formed barrier coating 102 provides quantifiable information associated with the interaction between the applied fluid and the coated surface. More particularly, the applied liquid will wet the surface to a degree depending on the properties of the surface, and a formed barrier coating should provide a different contact angle as compared to a surface lacking a barrier coating.

With specific reference to FIG. 3A, the initially formed barrier coating 102 formed atop the surface 100 provides a measurable contact angle θ between the droplet 104 and the substantially planar (e.g., horizontal) formed barrier coating 102. The contact angle θ shown in FIG. 3A can provide the initial or reference contact angle of the formed coating, for example, indicative of a 100% barrier coating or thereabouts, which serves as a baseline in an algorithm against which future coating assessments can be compared. With reference to FIG. 3B, the measurable contact angle θ between the droplet 104 and the barrier coating 102, measured at a predetermined time period after initial barrier coating application, for instance after a predetermined `in use' time duration, indicates the present state or integrity of the formed barrier coating 102. For example, comparing FIGS. 3A and 3B, which may be exaggerated for purposes of illustration, it is apparent that after a predetermined time duration the integrity of the barrier coating degrades, as evidenced by the angular change in θ, which shows a greater spread of the droplet and wetting of the surface indicating a decrease in the performance of the barrier coating 102, at least in terms of the ability of the barrier coating to repel fluids. In other words, in FIG. 3A the droplet 104 maintains its spherical shape to a greater degree as compared to the droplet shape shown in FIG. 3B in which the droplet spreads across the surface, indicating a greater degree of water repellency in the initially formed barrier coating as compared to the barrier carrier after a predetermined time (e.g., use) duration.

In some embodiments, the initial or refence contact angle measurement can serve as the 100% measurement indicative of a 'new' barrier coating. In a Step 214, additional contact angle measurements can be taken at one or more predetermined time durations after initial formation, for example after hours, days, weeks, months or years following in use service, and the algorithm can be used to determine a percentage difference corresponding to barrier coating degradation. In a Step 216, the amount of measured degradation can be used to determine the need for barrier coating re-application or component replacement. For example, different measured contact angles may correspond, for example, 75% barrier coating integrity, 50% barrier coating integrity, or 25% barrier coating integrity, or other, and the percentage can be used to determine the need for re-application or replacement. The algorithm can include different contact angle measurements corresponding to percentages of barrier coating integrity or life-remaining, which can be used to monitor the status of the barrier coating indicative of barrier coating performance. While the contact angle measurement may be an indicator of hydrophobicity performance of the barrier coating, the same can be used to determine the general state of the barrier coating, and consequently the performance state of the other functionalities of the multifunctional barrier coating.

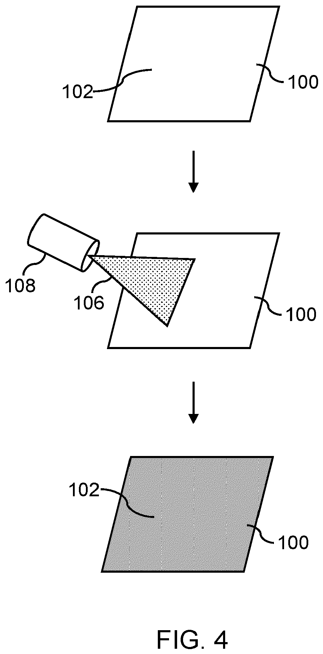

With reference to FIG. 4, the measurement step may include subjecting the substrate to a predetermined process configured to effect a change in the formed barrier coating. For example, with formed barrier coatings including a fluorescence capable dye component as discussed above, UV light may be directed to the substrate and the measurement technique may include comparing an intensity or amount of fluorescence compared to a predetermined threshold value and/or compared to an initial or refence fluorescence measurement. In some embodiments, intensity level data for a particular substrate may be saved for comparison against future data to track wear and/or coating performance. In some embodiments, the methods disclosed herein can be used to determine the level of coating wear between areas of a substrate by comparing the level of intensity between different predetermined areas. For example, obtained data can be used to determine frequent touchpoints that may require more frequent recoating, more robust coating, and/or additional coating layers. In an optional step, the substrate under test may be flagged for further action, for instance reapplication, servicing or replacement of the associated substrate, element or component. Methods according to the present disclosure can be used to verify the presence or absence of the applied barrier coating, for example, to verify the application and quality of the barrier coating during manufacturing and/or detect wear in the barrier coating during service.

FIG. 4 shows schematically the substrate 100 under test having a detectable fluorescent dye as a component of the formed barrier coating 102, application of the predetermined radiation 106 to be absorbed by the fluorescent dye, and emission of light in the visible spectrum indicated by the appearance difference between the top and bottom figures indicating fluorescence and therefore the presence of the barrier coating 102. Wear may be quantifiable as a reduction in luminosity of the fluorescent indicators under a wavelength of light. As luminosity of the fluorescent indicators may be reduced over time, the efficacy of the coating may be negatively correlated to a wear associated with the surface and a time since the barrier coating was applied. Thus, both the efficacy of the coating and the luminosity of the fluorescent indicator are negatively correlated to a wear and a time (e.g., as the fluorescent indicator is worn from the surface, the coating may be similarly worn). A correlation between the efficacy and the luminosity may thus be determined by a model.

In some embodiments, a system may include a light source 108 for producing the UV radiation 106. The light source may be configured to emit radiation in a wavelength, for example, from 300 to 400 nm. For example, the system may include a blacklight. Light generated by the light source may be directed to the surface. The radiation from the light source may interact with the fluorescent indicator in the barrier coating thereby causing the fluorescent indicator to emit light (e.g., visible light in the 400 to 700 nm wavelength range). In some embodiments, the system may be configured to generate an image of the emitted light from the fluorescent indicator. The image of the emitted light from the fluorescent indicator may be generated by a detector, and such detection may occur by analog or digital means. For example, the detector may include, but is not limited to, an ultra-violet (UV) detector, a charge couple device (CCD) detector, a time delay and integration (TDI) detector, a photomultiplier tube (PMT), an avalanche photodiode (APD), a complementary metal-oxide-semiconductor (CMOS) sensor, or the like. The image may have an associated brightness or intensity (e.g., in lumens). The image may also include a color standard. The image may also be a greyscale image.

The system may further include a controller including a memory and a processor, wherein the controller is communicatively coupled with the detector. In this regard, the image generated by the detector may be provided to the controller of the system and stored in the memory. The controller may also process the image to determine an intensity profile. The memory may also include a model for estimating a barrier coating efficacy based on the received images. The model may correlate various data associated with the image (e.g., a luminosity, a brightness, a color standard, etc.) with an efficacy of a barrier coating. In some embodiments, the model may estimate the efficacy for the barrier coating based on the received image, and based on the estimated efficacy, the system may ensure all surfaces are treated with a sufficient coating. If an insufficient efficacy is estimated, the system may provide a notification to apply an additional coating. The system may be handheld for in field use and may include a power source for powering various components of the system, such as, but not limited to, the controller, detector and the light source 108. The system may also be configured to image the surface under ambient lighting conditions or under conditions with no ambient lighting.

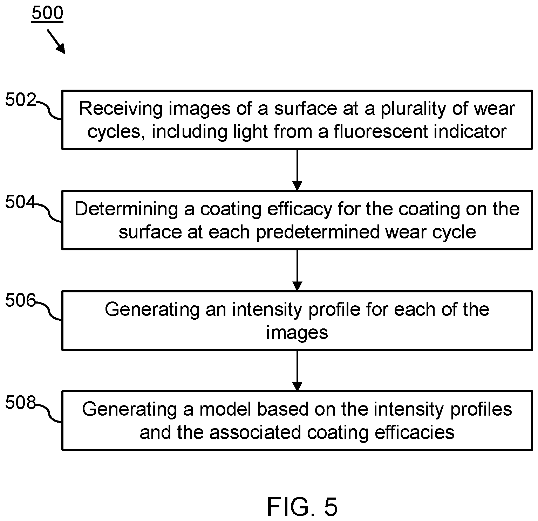

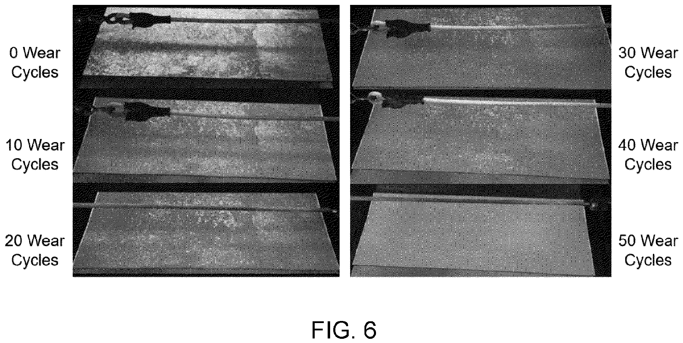

FIG. 5 shows a method 500 including in a Step 502 receiving images of a surface at a plurality of wear cycles, for example as shown in FIG. 6, the images including light from a fluorescent indicator. Sample images may be taken at various wear amounts, such as, but not limited to, from 0 wear cycles to 50 wear cycles. In this regard, sample images may be taken at any number of wear cycles and/or at various times after applying the barrier coating (e.g., a week, two weeks, a month, etc.). The method may further include in a Step 504, determining a coating efficacy for the coating on the surface at each of the wear cycles, wherein the coating efficacy may be determined by one or more of liquid chromatography or mass spectrometry. The method may further include in a third Step 506, generating an intensity profile for each of the images. The method may further include in a Step 508, generating a model based on the intensity profiles and the associated coating efficacies, and the model may correlate the intensity profiles and the measured coating efficacies.

In some embodiments, the barrier coating forming solution may be implemented as a wipe kit. In some embodiments, the kit may include an outer container for holding a plurality of wipes each saturated with a predetermined amount of barrier coating forming solution as described above. In some embodiments, the plurality of wipes may be individually packaged. In other embodiments, the plurality of wipes may be stacked and the outer container filled with a predetermined amount of barrier coating forming solution. In use, an individual wipe is removed from the container and/or its individual packaging, and wiped on the surface of the substrate to transfer the barrier coating forming solution from the wipe to the substrate.

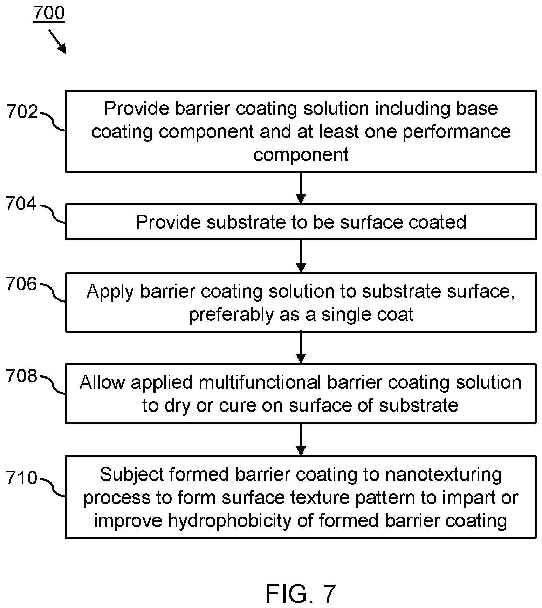

With reference to FIG. 7, another method for forming a barrier coating on a substrate surface according to the present disclosure is illustrated generally at 700. In a Step 702, a barrier coating forming solution is provided including a base component and at least one performance component. In some embodiments, the barrier coating solution includes the base coating component in an amount from 5% to 40% by weight of the barrier coating forming solution, and more preferably from 25% to 35% by weight of the barrier coating forming solution. Examples of base coating components include urethanes or polyurethanes, epoxy, polyimide, polyamide and siloxanes, in addition to base coating components discussed above, individually or in combination.

In some embodiments, the base coating component includes a hydrophobic polymer to impart increased water repellency and durability of water repellant, as well as resistance to the effects of UV radiation, abrasion and chemical disinfectants. Suitable examples of hydrophobic polymers include, but are not limited to, silicon-based polymers such as polysiloxanes, siloxanes and organofunctional silanes, as well as fluoropolymers, individually or in combinations thereof. As discussed further below, the base coating forming the barrier coating is textured to improve hydrophobicity, for example, improving the hydrophobicity of the formed barrier coating from hydrophobic (i.e., water contact angle greater than 90 degrees) to superhydrophobic (i.e., water contact angle greater than 150 degrees). In some embodiments, an additional coating may be formed atop the micro- or nanotextured formed coating or micro- or nanotextured substrate surface, completely covering the micro- or nanotextured features or covering parts thereof, for example, filling troughs created in the formed pattern. Such optional additional coatings may include performance coatings as discussed herein and/or reinforcement or protective coatings for maintaining the formed structures.

In some embodiments, the barrier coating forming solution includes a solvent in an amount from 50% to 70% by weight of the barrier coating forming solution. Examples of solvents include, but are not limited to, tetrahydrofuran preferable for providing uniform coating thickness and rapid drying, as well as good working viscosity, alcohols such as isopropanol and ethanol, water, and acetates such as methyl acetate and tert-butyl acetate, individually or in combination. In some embodiments, aqueous solvents may be preferable to organic solvents for environmental and substrate compatibility reasons.

The performance component of the barrier coating forming solution includes at least one of a flame, smoke and toxicity (FST) resistive component, an ultraviolet (UV) resistive component, and an antimicrobial component, each as discussed above. In a particular embodiment, the flame, smoke and toxicity (FST) resistive component, when present, may be provided in an amount from 0.1% to 5% by weight of the barrier coating forming solution, the ultraviolet (UV) resistive component, when present, may be provided in an amount from 0.1 % to 2% by weight of the barrier coating forming solution, and the antimicrobial component, when present, may be provided in an amount from 0.1% to 5% by weight of the barrier coating forming solution.

In a Step 704, a substrate having a surface to be coated is provided, for instance an aircraft interior component as described above. In an optional step, the surface of the substrate may be pre-treated or otherwise activated to promote adhesion of the barrier coating to be formed on the surface. In a Step 706, the barrier coating forming solution is applied to the surface of the substrate, preferably as one single coat. Application techniques may include electrostatic spray application, dipping, wiping, brushing, spraying or other application method, individually or in combination. In a Step 708, the applied barrier coating forming solution is allowed to dry or cure on the surface of the substrate, under ambient or controlled conditions. In some embodiments, formed surface coating films have a thickness ranging from less than 1 mm to greater than several micrometers, depending on application.

In a Step 710, the formed barrier coating is subjected to a process(es) for texturing (i.e., increasing surface roughness) the top surface of the formed barrier coating. Texturing processes may include, but are not limited to, femto- and picosecond laser sweeping across the surface using an automated system to form a predetermined pattern at depth in the surface. Increasing the surface roughness enhances the hydrophobic behavior of the barrier coating, such that fluid droplets on top of the barrier coating tend to become near spherical. As a result, the droplets roll away from the surface because of the small adhesion energy and small contact area between the fluid and the nanotextured barrier coating. The hydrophobicity of the barrier coating is determined by both the chemical composition and the geometrical nanostructure of the barrier coating surface.

The present inventors have found that coatings that impart barrier properties, as well as antimicrobial properties, can be nanotextured as a second or subsequent step, following a first step of barrier coating application and formation, to impart or improve hydrophobic properties while maintaining the durability of the base coating. Preferable surface texturing includes nanotexturing to produce predetermined patterns of spaced upstanding structures. In some embodiments, the upstanding structures are cones, cylinders or pillars. In embodiments, the upstanding structures collectively occupy at least 40% of the predetermined pattern, more preferably at least 80% of the predetermined pattern. In other words, the density of the formed structures should be significant to achieve maximum packing and protection of the surface underneath. In some embodiments, spacing between adjacent ones of the upstanding features is from 0 nanometers to 5 nanometers (e.g., 0 nanometers to 5 nanometers in each of the X- and Y-directions), measured from a center, base or tip or the formed structures. In some embodiments, a depth of the upstanding features is preferably from 0.1% to 60% of the total thickness of the formed barrier coating, depending on the total thickness of the barrier coating, such that the laser texturing does not penetrate the entire coating thickness.

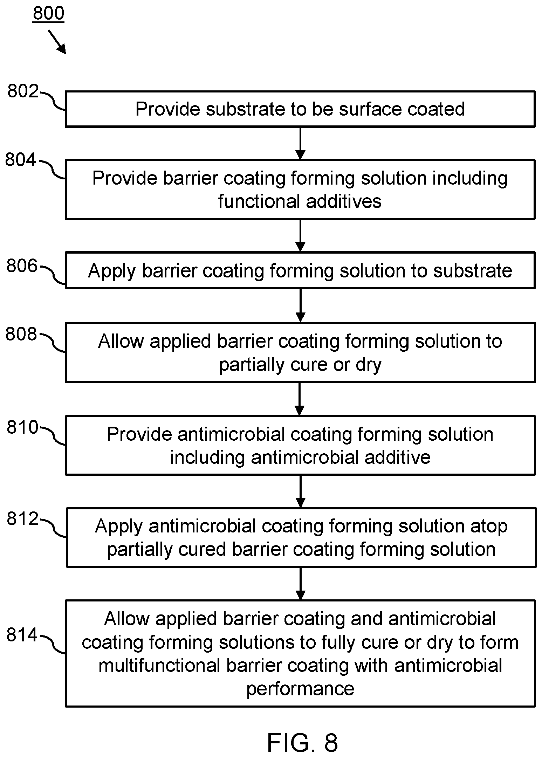

With reference to FIG. 8, a further method for forming a barrier coating is illustrated generally at 800. In a Step 802, a substrate having a surface is provided, for instance an aircraft interior component as described above. In a Step 804, a barrier coating forming solution is provided (i.e., a 'first' coating forming solution). In some embodiments, the barrier coating forming solution includes a base coating component and at least one performance component, and more preferably at least two performance components. In some embodiments, the barrier coating forming solution includes the performance components of the barrier coating other than the antimicrobial component.

The base coating component may be a urethane, epoxy, polyimide, or polyamide, individually or in combination, and the at least one, and preferably at least two, performance components may include FST resistive components, UV resistive components, and a dye component. In a particular embodiment, the barrier coating forming solution includes the base coating component provided in an amount from 5 to 40% by weight of the first barrier coating forming solution, a solvent in an amount from 50 to 70% by weight of the first barrier coating forming solution, the FST resistive component in an amount from 0.1 to 5% by weight of the first barrier coating forming solution, the UV resistive component in an amount from 0.1 to 2% by weight of the first barrier coating forming solution, and the dye component in an amount less than 0.5% by weight of the first barrier coating forming solution. In some embodiments, the solvent includes alcohol, water, and an acetate, individually or in combination.

As discussed above, the FST resistive component may include clays having a particle diameter size from 1 to 25 microns, graphene, graphite, carbon nanotubes, aluminum trihydrate, an organophosphate, magnesium hydroxide, an antimony oxide, a molybdenum compound, a boron compound, a halogenated compound, melamine, and zinc, individually or in combination. The UV resistive component may include titanium dioxide, zinc oxide, a UV stabilizer, a hindered amine light stabilizer (HALS), and graphene, individually or in combination. The dye component may include a fluorescent indicator capable of absorption in the UV spectrum and emission in the visible spectrum. In some embodiments, the barrier coating forming solution is devoid of an antimicrobial component(s).

In a Step 806, the barrier coating forming solution is applied to the surface of the substrate. The barrier coating forming solution imparts multifunctional properties to the final formed coating, for instance, UV and chemical resistance, fluid resistance, FST performance, dye tracing, etc., other than antimicrobial performance. In a Step 808, the applied barrier coating forming solution is allowed to partially cure or dry for a predetermined time duration. In some embodiments, the predetermined time duration ranges from 1 minute to 24 hours, more preferably from 5 minutes to 2 hours, and most preferably from 10 minutes to 1 hour, each of the mentioned times being approximate times.

In a Step 810, an antimicrobial coating forming solution (i.e., a 'second' coating forming solution) is provided including the antimicrobial component or component, for instance an antimicrobial additive as discussed above. In a Step 812, the antimicrobial coating forming solution is applied atop the partially cured or dried barrier coating forming solution. In a final Step 814, the applied first and second coating forming solutions are allowed to fully cure or dry together to form the final, fully formed multifunctional surface coating with surface antimicrobial performance. According to the method, the steps of applying the barrier coating forming solution, allowing the barrier coating forming solution to partially cure or dry, applying the antimicrobial coating forming solution, and allowing the two, separately applied coating forming solutions to fully cure or dry are performed sequentially, whereas the providing steps may be performed according to other orders.

The present inventors have found that compounded solutions tend to form barrier coatings with substantially uniform distribution of the additives throughout the final formed barrier coating. Whereas certain performance components such as UV resistive and FST additives function as intended regardless of their respective position at depth within the formed coating, the antimicrobial additives, to perform as intended, must be positioned at or near the surface of the fully formed barrier coating. For example, whereas an antimicrobial additive in a compounded coating solution tends to randomly orient the formed structures, a bilayer formed barrier coating, wherein the first applied layer includes the performance additives other than the antimicrobial additive and the second layer includes the antimicrobial additive, tends to position the formed structures at the top of the formed barrier coating perpendicular to the surface. By partially curing the first coating layer, the second coating layer can anchor to the 'wet' first layer (dry to the touch but not cross-linked). Each of the first and second barrier coating forming solutions preferably include the same miscible solvent.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

## Claims

1. A method for forming a multifunctional surface coating, comprising the steps of:
providing a substrate having a surface;
providing a barrier coating forming solution comprising a base coating component and at least two performance components;
applying the barrier coating forming solution to the surface of the substrate;
providing an antimicrobial coating forming solution comprising at least one antimicrobial component;
applying, after a predetermined time duration following application of the barrier coating forming solution to the surface, the antimicrobial coating forming solution atop the applied barrier coating forming solution; and
allowing the applied barrier and antimicrobial coating forming solutions to fully cure or dry to form a fully formed multifunctional coating on the surface of the substrate.

2. The method according to claim 1, wherein the barrier coating forming solution is devoid of an antimicrobial component.

3. The method according to claim 1, further comprising the step of:
subjecting a top surface of the formed multifunctional coating to a nanotexturing process to form a predetermined pattern of spaced apart upstanding structures in the top surface of the formed multifunctional coating.

4. The method according to claim 1, wherein the base coating component is a urethane, epoxy, polyimide, or polyamide, individually or in combination, and the at least two performance components include at least two of a flame, smoke and toxicity (FST) resistive component, an ultraviolet (UV) resistive component, and a dye component.

5. The method according to claim 1, wherein the barrier coating forming solution comprises:
the base coating component provided in an amount from 5 to 40% by weight of the barrier coating forming solution;
a solvent in an amount from 50 to 70% by weight of the barrier coating forming solution;
a flame, smoke and toxicity (FST) resistive component in an amount from 0.1 to 5% by weight of the barrier coating forming solution;
an ultraviolet (UV) resistive component in an amount from 0.1 to 2% by weight of the barrier coating forming solution; and
a dye component in an amount less than 0.5% by weight of the barrier coating forming solution.

6. The method according to claim 5, wherein the solvent comprises alcohol, water, and an acetate, individually or in combination.

7. The method according to claim 5, wherein the FST resistive component comprises clay having a particle diameter size from 1 to 25 microns, graphene, graphite, carbon nanotubes, aluminum trihydrate, an organophosphate, magnesium hydroxide, an antimony oxide, a molybdenum compound, a boron compound, a halogenated compound, melamine, and zinc, individually or in combination.

8. The method according to claim 5, wherein the UV resistive component comprises titanium dioxide, zinc oxide, a UV stabilizer, a hindered amine light stabilizer (HALS), and graphene, individually or in combination.

9. The method according to claim 5, wherein the dye component comprises a fluorescent indicator capable of absorption in the UV spectrum and emission in the visible spectrum.

10. The method according to claim 1, wherein the at least one antimicrobial component comprises copper, zinc pyrothione, silver, silver oxide, graphene, a quaternary ammonium compound, a silane quaternary ammonium compound, and triclosan, individually or in combination.

11. The method according to claim 1, wherein the predetermined time duration ranges from 5 minutes to 2 hours.

12. The method according to claim 1, wherein the predetermined time duration ranges from 10 minutes to 1 hour.

13. A method for forming a multifunctional surface coating, comprising the steps of:
providing a substrate having a surface;
providing a barrier coating forming solution comprising at least two performance components and devoid of an antimicrobial component;
applying the barrier coating forming solution to the surface of the substrate;
allowing the applied barrier coating forming solution to partially cure for a predetermined time duration;
providing an antimicrobial coating forming solution comprising at least one antimicrobial component;
applying the antimicrobial coating forming solution atop the partially cured applied barrier coating forming solution; and
allowing the applied barrier and antimicrobial coating forming solutions to fully cure or dry to form a multifunctional coating on the surface of the substrate.

14. The method according to claim 13, wherein the predetermined time duration ranges from 5 minutes to 2 hours.

15. The method according to claim 13, wherein the barrier coating forming solution comprises:
a base coating component provided in an amount from 5 to 40% by weight of the barrier coating forming solution;
a solvent in an amount from 50 to 70% by weight of the barrier coating forming solution;
a flame, smoke and toxicity (FST) resistive component in an amount from 0.1 to 5% by weight of the barrier coating forming solution;
an ultraviolet (UV) resistive component in an amount from 0.1 to 2% by weight of the barrier coating forming solution; and
a optionally a dye component in an amount less than 0.5% by weight of the barrier coating forming solution.
